# EUROPÄISCHE PATENTANMELDUNG

(11) **EP 4 124 839 A2**
(43) Veröffentlichungstag der Anmeldung: **01.02.2023**
(21) Anmeldenummer: 22180326.5
(22) Anmeldetag: 22.06.2022
(51) Int. Cl.: G01J 3/18, G01J 3/453

(54) **SPATIAL-HETERODYNE-SPEKTROMETER UND VERFAHREN ZUR DURCHFÜHRUNG EINER HOCHAUFLÖSENDEN, MEHRDIMENSIONALEN MULTIBAND-PUSH-BROOM-ERDBEOBACHTUNG**

(30) Priorität: 28.07.2021 DE 102021119554
(71) Anmelder: OHB SE, 28359 Bremen (DE)
(72) Erfinder: Bernhard, Sang, 80689 München (DE); Deiml, Michael, 82205 Gilching (DE)
(74) Vertreter: Hoener, Matthias

(57) **Zusammenfassung**

Die Erfindung schafft ein Spatial-Heterodyne-Spektrometer sowie ein Verfahren zur Durchführung einer hochauflösenden, mehrdimensionalen Multiband-Push-Broom-Erdbeobachtung, mit dem mehrere Spektralbereiche mit hoher Auflösung analysierbar sind und gewonnene Daten besonders einfach und genau analysierbar sind. Das wird erreicht durch ein Spatial-Heterodyne-Spektrometer (10) für eine mehrdimensionale Multiband-Push-Broom-Erdbeobachtung mit einem Strahlteiler (26) sowie einen ersten Spektrometer-Arm (37) und einen zweiten Spektrometer-Arm (38), wobei an den zweiten Seiten (41, 42) der beiden Spektrometer-Arme (37, 38) jeweils ein Echelle-Gitter (24, 25) angeordnet ist. An der ersten Seite (40) des zweiten Spektrometer-Arms (38) ein Detektor (20) angeordnet ist. An diesem Ausgang des Spektrometers (10) ist über eine Optik der Detektor (20) angebunden. Auf diesem Detektor (20) sind Interferenzstreifen durch Überlagerung von Wellenfronten von beiden Spektrometer-Armen (37, 38) als einfallende elektromagnetische Strahlung detektierbar.

## Beschreibung

Die Erfindung betrifft ein Spektrometer bzw. ein Spatial-Heterodyne-Spektrometer zur mehrdimensionalen Multiband-Push-Broom-Erdbeobachtung gemäß dem Anspruch 1. Des Weiteren betrifft die Erfindung ein Verfahren zur Durchführung einer hochauflösenden, mehrdimensionalen Multiband-Push-Broom-Erdbeobachtung gemäß dem Oberbegriff des Anspruchs 8.

Spektrometer bilden in vielen Bereichen die Grundlage für spektrale Messungen sowie für diagnostische Verfahren. Daher werden derartige Messsysteme auch regelmäßig in Instrumenten zur Fernerkundung, wie beispielsweise Fernerkundungsatelliten oder - flugzeugen, eingesetzt, um beispielsweise Feuer zu erkennen, den Zustand von Vegetationen zu bestimmen, Verursacher von Klimaveränderungen zu überwachen oder auch die Zusammensetzung von Exoplaneten abzuschätzen.

Oftmals werden Gitterspektrometer in Fernerkundungsinstrumenten eingesetzt. Insbesondere, wenn die Erkundung im sichtbaren Wellenlängenbereich erfolgt, und ein großer Spektralbereich mit moderater spektraler Auflösung beobachtet werden soll, bieten sich diese Spektrometer an. Außerdem ist es bekannt Michelson-Interferonmeter einzusetzen; und zwar vor allem wenn Messungen im infraroten oder auch sichtbaren Spektralbereich bei einer sehr hohen spektralen Auflösung erforderlich sind. Allerdings geht die hohe spektrale Auflösung derartiger Instrumente mit einer hohen Komplexität des Systems einher. Da das Instrument über bewegliche Teile verfügt, verhält es sich besonders empfindlich gegenüber mechanischen Einflüssen wie beispielsweise Vibrationen oder Schocks. Darüber hinaus benötigt es sehr viel Volumen, das bekanntermaßen insbesondere in Satelliten stark begrenzt ist.

Sofern nur eine schmale spektrale Bandbreite mit hoher spektraler Auflösung und hoher Empfindlichkeit von Interesse sind, bietet sich die Verwendung eines Fabry-Perot-Spektrometers an. Allerdings weist auch dieser Typ von Spektrometer oft bewegliche Teile auf und benötigt darüber hinaus eine hohe Oberflächenplanarität und -qualität, deren Herstellung besonders komplex sowie kostenintensiv ist.

Statische Fourier-Transformations-Spektrometer stellen eine Art von Spektrometer dar, welche gegenüber den vorgenannten Bauarten Vorteile aufweisen, die insbesondere für die Fernerkundung von bewegten Trägerplattformen aus nützlich sind. Bei dem hier beschriebenen bzw. beanspruchten Spatial-Heterodyne-Spektrometer (SHS) handelt es sich um ein abbildendes statisches Fourier-Transformations-Spektrometer. Das abbildende SHS kann zusätzlich zu spektralen Untersuchungen die Fähigkeit aufweisen, Aufnahmen mit einer räumlichen Auflösung durchzuführen. Insbesondere durch seine hohe spektrale Auflösung und sein robustes Design gestaltet sich das SHS für die Fernerkundung mittels Satelliten oder Fluggeräten als besonders geeignet.

Nicht zuletzt durch die monolithische Bauart erhält das SHS eine besonders große Robustheit und Unempfindlichkeit gegenüber mechanischen Kräften, welche bei Raketenstarts unvermeidlich sind. Darüber hinaus erweist sich insbesondere die gegenüber vergleichbaren Gitterspektrometern hohe Lichtempfindlichkeit als besonders vorteilhaft. Nicht zuletzt dadurch lässt sich diese Art von Spektrometer besonders klein konstruieren, um auch in sogenannten Kleinstsatelliten integriert werden zu können.

Ein Nachteil der bekannten SHS besteht darin, dass nur eine sehr geringe spektrale Bandbreite mit einer hohen Auflösung analysiert werden kann, die für viele Anwendungen der Fernerkundung limitert ist. Ein weiterer Nachteil besteht darin, dass die mittels des SHS aufgenommenen räumlichen und spektralen Informationen nur schwer voneinander zu trennen sind und sich somit die Auswertung der Daten als besonders komplex darstellt.

Der Erfindung liegt die Aufgabe zugrunde, ein Spatial-Heterodyne-Spektrometer sowie ein Verfahren zur Durchführung einer hochauflösenden, mehrdimensionalen Multiband-Push-Broom-Erdbeobachtung zu schaffen, mit dem mehrere Spektralbereiche mit hoher Auflösung analysierbar und gewonnene Daten besonders einfach und genau analysierbar sind.

Eine Lösung dieser Aufgabe wird durch die Merkmale des Anspruchs 1 beschrieben. Demnach ist es vorgesehen, dass ein Spatial-Heterodyne-Spektrometer (SHS) für mehrdimensionale, insbesondere dreidimensionale, nämlich für zwei räumliche Dimensionen und eine spektrale Dimension, Multiband-Push-Broom-Erdbeobachtung, vorzugsweise mittels eines Satelliten, einen Strahlteiler aufweist sowie einen ersten Spektrometer-Arm und einen zweiten Spektrometer-Arm, wobei an den zweiten Seiten der beiden Spektrometer-Arme, insbesondere an den Enden der beiden Arme, jeweils ein Echelle-Gitter angeordnet ist. Der erste Spektrometer-Arm erstreckt sich von einer Voroptik bis zu einem Echelle-Gitter bzw. einer zweiten Seite. Der zweite Spektrometer-Arm erstreckt sich von der ersten Seite bis zu einem Echelle-Gitter bzw. einer zweiten Seite. An der ersten Seite des zweiten Spektrometer-Arms, insbesondere an einem Ausgang des Spektrometers, ist ein Detektor angeordnet. An diesem Ausgang des Spektrometers ist über eine Optik der Detektor angebunden. Auf diesem Detektor sind Interferenzstreifen durch Überlagerung von Wellenfronten von beiden Spektrometer-Armen als einfallende elektromagnetische Strahlung detektierbar. Die in das Spektrometer einfallenden elektromagnetischen Wellen werden durch den Strahlteiler aufgeteilt in verschiedene Wellenfronten, welche jeweils an den zweiten Seiten der Spektrometer-Arme durch die Gitter zurückreflektiert werden. Die geteilten sowie reflektierten Wellenfronten treten erneut durch den Strahlteiler und fallen auf den Detektor am Ausgang des Spektrometers bzw. interferieren dort. Durch diese Merkmale wird die oben angeführte Aufgabe gelöst.

Das erfindungsgemäße Spektrometer besteht im Wesentlichen aus dem Strahlteiler und den beiden Beugungsgittern. Eine Wellenfront mit der Wellenlänge λ_{L} (Littrow-Wellenlänge), die senkrecht zu der optischen Achse des Spektrometers den Strahlteiler erreicht und dort aufgespalten wird, trifft auf die beiden Gitter. Die beiden Echelle-Gitter können gegenüber der optischen Achse um den Littrow-Winkel *θ_{L}* verdreht sein und zwar für den ersten und den zweiten Arm in entgegengesetzte Richtungen. Dieser Drehwinkel ist so gewählt, dass die Wellenfronten mit der spezifischen Wellenlänge λ_{L} für eine bestimmte Beugungsordnung genau in die gleiche Richtung zurück reflektiert werden, aus der sie kommen. Dies wird unter der Littrow-Bedingung erreicht. Sobald die Wellenfronten konstruktiv miteinander auf der Detektorebene interferieren, kann eine wenigstens nahezu konstante Intensität gemessen werden.

Hat die Eingangswellenfront jedoch eine andere Wellenlänge λ_{L} + δ_{L} als λ_{L}, werden die Wellenfronten bei der Rückreflexion durch die beiden Gitter gekippt. Die Verkippungen der beiden Wellenfronten hängen dabei vom Abstand δ_{L} zur Littrow-Wellenlänge λ_{L} ab. Die Verkippungen haben für die beiden Spektrometer-Arme entgegengesetzte Vorzeichen, da die beiden Gitter auch in entgegengesetzte Richtungen zueinander verkippt sind. Sobald die Wellenfronten wieder interferieren, entsteht durch die Differenz der optischen Wege, bedingt durch die Verkippungen der Wellenfronten, ein Interferenzmuster mit konstruktiven und destruktiven Interferenzen und zwar in Abhängigkeit von der Position auf dem Detektor. Die Interferenzen der Wellenfronten auf dem Detektor werden als Fizeau-Streifen mit einer bestimmten Ortsfrequenz beobachtet. Dabei hängt die Ortsfrequenz von der Verkippung der Wellenfronten ab, die wiederum von der Differenz zwischen der Wellenlänge und der Littrow-Wellenlänge abhängt. Dies spiegelt den heterodynen Aspekt des Instrumentes wieder. Nicht monochromatisches Licht bildet ein Streifenmuster mit unterschiedlichen Ortsfrequenzen auf dem Detektor. Mithilfe einer Fourier-Transformation kann die Intensität in Abhängigkeit von der Ortsfrequenz und, wenn die Littrow-Wellenlänge bekannt ist, auch in Abhängigkeit von der Wellenlänge ermittelt werden. Daraus ergibt sich das Spektrum mit der entsprechend hohen spektralen Auflösung.

Vorzugsweise kann es weiter vorgesehen sein, dass vor dem Spektrometer eine fokussierende Voroptik angeordnet ist. Insbesondere ist es außerdem denkbar, dass vor der Voroptik mindestens ein Bandpassfilter mit vorzugsweise einem breiten Transmissionsbereich, angeordnet ist. Darüber hinaus kann es erfindungsgemäß vorgesehen sein, dass an der ersten Seite des zweiten Spektrometer-Arms eine Detektoroptik angeordnet ist.

Bei bekannten Spektrometern werden oftmals Kollimatoren als Voroptiken verwendet. Dies ist grundsätzlich möglich, weist aber deutliche Nachteile gegenüber einer fokussierenden Optik auf. Die hier beanspruchte fokussierende Voroptik umgeht diese Nachteile. Dabei wird das durch das Spektrometer betrachtete Beobachtungsfeld auf die Gitter des SHS abgebildet und eine räumliche Dimension mit spektralen Informationen überlagert. Die zweite räumliche Dimension bleibt unverändert. Eine dem SHS nachgeschaltete Detektoroptik bildet sodann die beiden Gitter auf dem Detektor ab. Dadurch wird eine Feinabstimmung zwischen der räumlichen Auflösung und der spektralen Bandbreite möglich.

Bei dem Detektor kann es sich um eine hochauflösende digitale Sensoreinheit mit beispielsweise einem CMOS- oder CCD-Chip mit einer Vielzahl von in Spalten und Zeilen angeordneten Pixeln handeln. Dem Detektor ist eine entsprechende Steuerung sowie Einrichtung zum Auswerten der Daten nachgeordnet.

Darüber hinaus sieht es ein weiteres Ausführungsbeispiel der Erfindung vor, dass zwischen dem Strahlteiler und dem ersten und dem zweiten Echelle-Gitter jeweils ein feldaufweitendes Prisma angeordnet ist. Durch die feldaufweitenden Prismen werden die Wellen so abgelenkt, dass die beiden Gitter virtuell senkrecht zur optischen Achse ausgerichtet werden. Das bedeutet für das SHS, dass der Einfluss des Wellenfront-Einfallswinkels auf den Kontrast erheblich reduziert wird, was eine größere numerische Apertur des Spektrometers ermöglicht. Bei einem SHS in fokussierender Konfiguration vergrößern die feldverbreiternden Prismen das Sichtfeld des Spektrometers. Durch die Prismen werden die mit größer werdenden Sichtfeld zunehmenden Aberrationen reduziert. Somit wird durch die Prismen die Abhängigkeit der Unschärfe von der Bildposition reduziert und die zulässige numerische Apertur effektiv erhöht.

Wie oben bereits ausgeführt, lässt sich die formulierte Aufgabe durch den Einsatz von Echelle-Gittern an den Enden der beiden Arme des Interferometers bzw. Spektrometers lösen. Echelle-Gitter werden bei hohen Beugungsordnungen und niedriger Gitterfurchenanzahl verwendet. Bei höheren Beugungsordnungen überlappen sich die spektralen Inhalte der einzelnen Beugungsordnungen räumlich miteinander. Bei dem hier beanspruchten SHS wird die räumliche Überlappung der Linien ausgenutzt, um das Spektrometer bei mehreren Littrow-Wellenlängen gleichzeitig zu nutzen, während der Littrow-Winkel konstant bleibt. Jede Littrow-Wellenlänge entspricht dabei einer bestimmten Beugungsordnung. Behält man durch eine geeignete optische Anordnung die gleichen Littrow-Winkel für jede Beugungsordnung, können die Kippungen der optischen Komponenten gleich gehalten werden und müssen nicht für jede einzelne Littrow-Wellenlänge neu angepasst werden. Da das SHS die spektralen Informationen in eine räumliche Richtung auf dem Detektor transformiert, können die überlappenden Beugungsordnungen unterschieden werden, indem ein segmentierter Bandpassfilter in die Bildebene oder nahe davor eingeführt wird. Für jeden Bandpass wird ein individuelles Interferogramm um die Littrow-Wellenlänge aufgenommen, die der Beugungsordnungen des Echelle-Gitters entspricht. Die Bandpassfilter können auch die Interferogramme je nach Anwendungsbedarf in räumlicher Richtung trennen. Es sei ausdrücklich darauf hingewiesen, dass die Verwendung von Echelle-Gittern und Bandpassfilter nicht auf zwei Spektralbänder beschränkt ist.

Ein Nachteil des hier beschriebenen fokussierenden Designs des SHS besteht darin, dass sich die spektralen Informationen mit den räumlichen Informationen in einer Dimension überlappen. Aufgrund dessen kann die spektrale Information nicht eindeutig von den räumlichen Informationen für beliebige Beobachtungsfelder unterschieden werden, wie es jedoch bei Fernerkundungssystemen mit Ausnahme von Spezialfällen notwendig ist. Dieses Problem lässt sich erfindungsgemäß umgehen, indem die aufgenommenen Interferogramme bzw. Bilder aus einem zeitlich gescannten Beobachtungsfeld neu angeordnet werden. Gemäß dem Anspruch 8 bedeutet dies, dass für ein Verfahren zur Durchführung einer hochauflösenden, mehrdimensionalen, insbesondere dreidimensionalen, Multiband-Push-Broom-Erdbeobachtung, insbesondere mittels Satelliten, die in einer zeitlichen Abfolge aufgenommenen Interferogramme bzw. Bilder umgeordnet werden. Das erfindungsgemäße Verfahren ist dadurch gekennzeichnet, dass durch einen Detektor in einer zeitlichen Abfolge mehrere Bilder / Interferogramme, insbesondere einzelne Interferogrammlinien, zu einem gleichen Bereich auf der Erdoberfläche aufgenommen und zu einem mehrdimensionalen Bild umgeordnet werden, wobei dieses mehrdimensionale Bild sowohl spektrale als auch räumliche Informationen des Bereichs auf der Erdoberfläche aufweist. Zur Durchführung dieses Verfahrens ist es insbesondere vorgesehen, das zuvor beschriebene Spektrometer zu verwenden. Durch diese Umordnung der Bilder / Interferogramme lässt sich die Mehrdeutigkeit der aufgenommenen Informationen vermeiden und die Daten für statische Szenen effektiv auswerten.

Vorzugsweise ist es erfindungsgemäß vorgesehen, dass der Detektor als optischer Sensor ausgebildet ist mit xₙ Pixel-Spalten und yₘ Pixel-Zeilen. Die Zeile bzw. der Streifen y₁ mit den x₁ bis xₙ Pixeln ist senkrecht zu einer Bewegungsrichtung des Spektrometers ausgerichtet. Zu einem Zeitpunkt T=1 werden durch jeden Pixel der Zeile y₁ spektrale Informationen, insbesondere Bestandteile einzelner Interferogrammlinien, mehrerer nebeneinander liegender Bereiche auf der Erdoberfläche aufgenommen. Zu einem Zeitpunkt T=2 werden dann durch jeden Pixel der Zeile y₂ spektrale Informationen derselben Bereiche auf der Erdoberfläche aufgenommen. Dies erfolgt solange, bis alle m Zeilen des Detektors die gleichen Bereiche abgescannt haben und dadurch vollständige Interferogramme aufgenommen wurden.

Ein weiteres vorteilhaftes Ausführungsbeispiel der Erfindung kann es vorsehen, dass die spektralen Informationen aller Pixel N einer Spalte xₙ, die den gleichen Bereich auf der Erdoberfläche aufgenommen haben, umgeordnet werden, um die spektralen und die räumlichen Information dieses Bereichs auf der Erdoberfläche voneinander zu trennen.

Darüber hinaus ist es denkbar, dass nach der Umordnung der einzelnen Bilder oder Interferogramme, insbesondere der einzelnen Interferogrammlinien, an der Summe der Interferogramme Fourier-Transformationen durchgeführt werden. Die räumlichen Informationen des beobachteten Bereichs auf der Erdoberfläche werden nicht mehr mit spektralen Informationen überlagert, da sie für das zusammengesetzte Interferogramm konstant sind und nur noch zum Spektrum bei einer räumlichen Frequenz von Null (das entspricht der Littrow-Wellenlänge) des Fourier-transformierten Interferogramms beitragen.

Die spektralen und räumlichen Informationen aufeinanderfolgender Bereiche werden in Bewegungsrichtung des Spektrometers kontinuierlich aufgenommen. Dadurch wird für jeden aufgenommenen Bereich auf der Erdoberfläche ein dreidimensionaler Datenwürfel mit räumlichen (zwei Dimensionen) und spektralen Informationen - Interferogramme - (eine Dimension) erstellt.

Ein bevorzugtes Ausführungsbeispiel der Erfindung wird nachfolgend anhand der Zeichnung näher beschrieben. In dieser zeigen:
- Fig. 1: Darstellung einer Erdbeobachtung mittels Satelliten,
- Fig. 2: Darstellung eines Spektrometers,
- Fig. 3: Darstellung mehrerer Interferogramme,
- Fig. 4: schematische Darstellung eines Bildumordnungsverfahrens, und
- Fig. 5: Darstellung mehrerer Interferogramme unter Verwendung von zwei Bandpassfiltern.

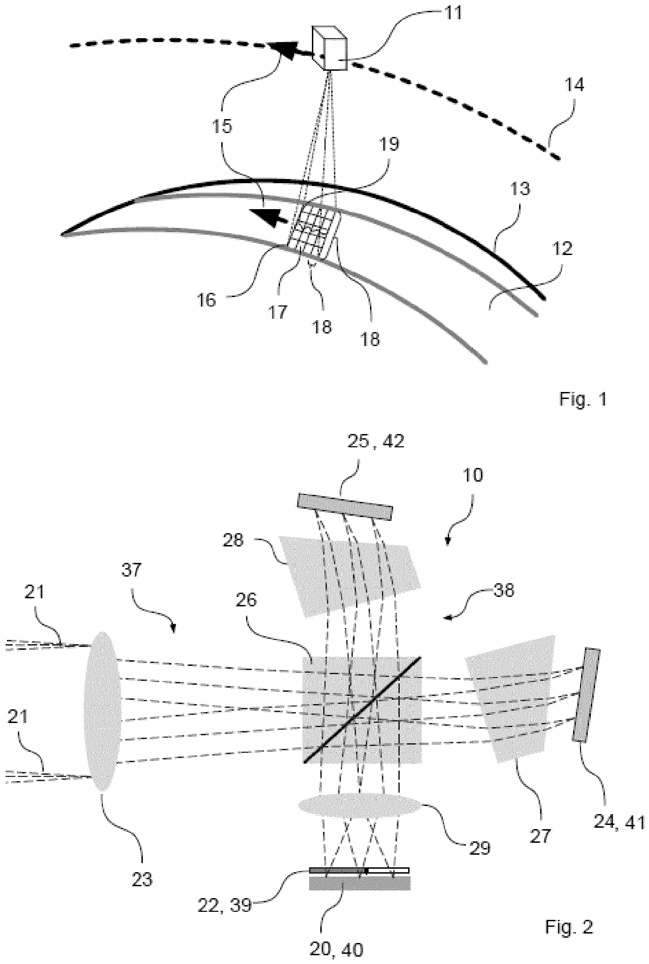

Für die Fernerkundung wird das hier beschriebene Spektrometer bzw. das Spatial-Heterodyne-Spektrometer (SHS) 10 in einem Satelliten 11 über die Oberfläche 12 der Erde 13 befördert. Gemäß der Fig. 1 bewegt sich der Satellit 11 dabei auf einer Umlaufbahn 14 in eine Richtung 15. Die hier nicht dargestellte Optik des Spektrometers 10 ist dabei auf die Oberfläche 12 der Erde 13 gerichtet. Bei dieser Nadir-Sicht wird ein Beobachtungsfeld 16, welches eine Vielzahl von einzelnen Beobachtungsbereiche 17 aufweist, in Richtung 15 über die Oberfläche 12 geführt. Bei dieser sogenannten Push-Broom-Erdbeobachtung werden somit mehrere Zeilen eines Detektors 20 des SHS 10 nacheinander über die gleichen Beobachtungsfelder 16 auf der Oberfläche 12 geführt.

Die einzelnen in der Fig. 1 dargestellten Bereiche 17 können mit einzelnen Pixeln eines Detektors 20 des Spektrometers 10 übereinstimmen. Die während der Fernerkundung von dem Spektrometer 10 aufgenommenen Interferogramme 19, 31 beinhalten für jeden einzelnen Bereich 17 sowohl spektrale als auch räumliche Informationen. Während das hier beschriebene Spektrometer 10 dazu dient, diese einzelnen Interferogramme 19 aufzunehmen, ermöglicht das beanspruchte Verfahren die Trennung der spektralen und räumlichen Informationen der aufgenommenen Interferogramme 19.

In der Fig. 2 ist stark schematisiert das Spektrometer 10 bzw. das Wirkprinzip des erfindungsgemäßen Spektrometers 10 skizziert. Dementsprechend weist das Spektrometer 10 einen ersten Spektrometer-Arm 37 und einen zweiten Spektrometer-Arm 38 auf. Der erste Spektrometer-Arm 37 erstreckt sich von einer Voroptik 23 bis zu einem Echelle-Gitter 24 bzw. einer zweiten Seite 41. Der zweite Spektrometer-Arm 38 erstreckt sich von der ersten Seite 40 bis zu einem Echelle-Gitter 25 bzw. einer zweiten Seite 42. Dabei bildet diese Voroptik 23 die aufgenommenen Bereiche 17 auf die beiden Echelle-Gitter 24, 25 ab, die an den zweiten Seiten 41, 42 der Spektrometer-Arme 37, 38 angeordnet sind.

Diese Echelle-Gitter 24, 25 sind jeweils um einen Littrow-Winkel gegenüber einer optischen Achse des Spektrometers 10 verkippt. Damit die eingehenden elektromagnetischen Wellen 21 auf die beiden Echelle-Gitter 24, 25 treffen, werden die Wellen 21 durch einen Strahlteiler 26 aufgeteilt. Die reflektierten bzw. transmittierten Wellen 21 treten dann zunächst durch feldaufweitende Prismen 27, 28, bevor sie auf die Echelle-Gitter 24, 25 treffen. Die reflektierten Wellen 21 laufen zurück durch die Prismen 27, 28 und den Strahlteiler 26, bevor sie auf den Detektor 20, der vorzugsweise als elektronische Kamera, beispielsweise als CMOS- oder CCD-Kamera, ausgebildet ist, an der ersten Seite 40, insbesondere dem Ausgang, des zweiten Spektrometer-Arms 38 treffen. Durch den Unterschied der Pfadlänge der elektromagnetischen Wellen entlang der beiden Spektrometer-Arme 37, 38 werden die Interferenzmuster auf dem Detektor erzeugt. Vor dem Detektor 20 ist bei dem hier schematisch dargestellten Ausführungsbeispiel eine ebenfalls als bikonvexe Linse ausgebildete Detektoroptik 29 vorgesehen. Direkt vor dem Detektor 20 ist ein segmentierter Bandpassfilter 22 vorgesehen, welcher in diesem Ausführungsbeispiel zwei Bandpässe aufweist. Der Filter kann dabei als separate Einheit nahe am Detektor 20 befestigt sein, oder er kann auf den Detektor 20 aufgedampft sein.

Zur Durchführung der mehrdimensionalen Erdbeobachtung wird das Spektrometer 10 zunächst derart ausgerichtet, dass das zu beobachtenden Beobachtungsfeld 16 scharf auf dem Detektor 20 abgebildet wird. Während der Beobachtung bewegt sich der Satellit 11 in Richtung 15, sodass die Streifen 18 des Detektors 20, bestehend aus den nebeneinanderliegenden Bereichen 17, nacheinander über die gleichen Beobachtungsfelder 16 bewegt werden. Dabei generiert das Spektrometer 10 sowohl zweidimensionale Bilder der einzelnen Bereiche 17 als auch Interferogramme 19, 31 bzw. spektrale Informationen der einzelnen Bereiche 17.

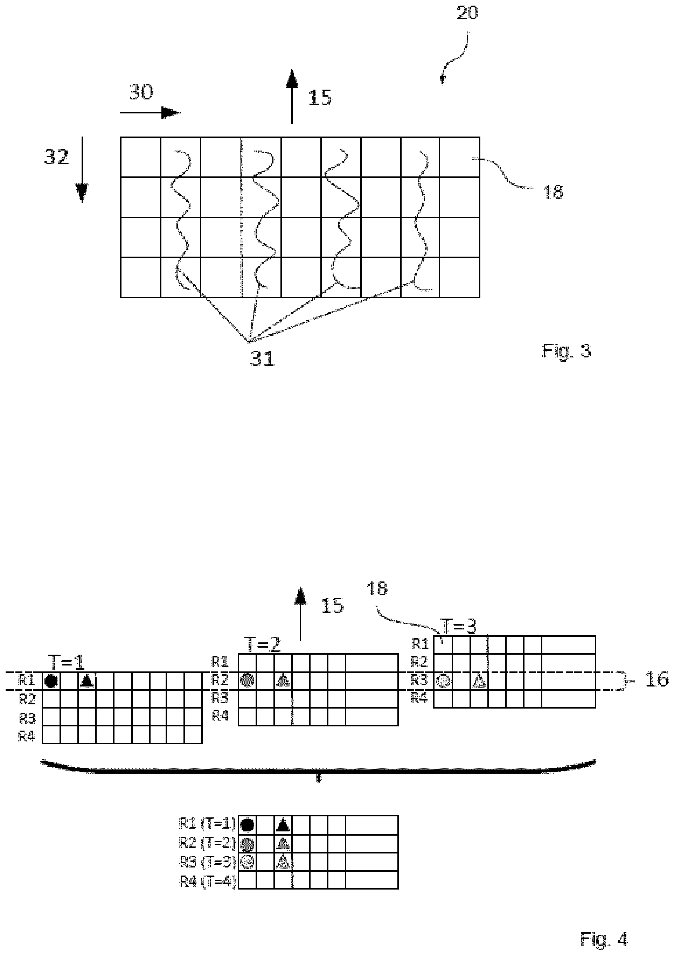

Das Spektrometer 10 ist derart ausgerichtet, dass die Dispersionsrichtung 32 der beiden Echelle-Gitter 24, 25 parallel zu der Richtung 15 ausgerichtet ist. In der Fig. 3 ist stark schematisiert der Detektor 20 dargestellt. Die mehreren Streifen 18 weisen eine Vielzahl von Pixeln auf, die jeweils einen Bereich 17 auf der Erdoberfläche 12 abbilden. Die Bereiche auf der Erdoberfläche 12 sind in der Regel mehrere Quadratkilometer groß. Während die Pixel des Detektors 20 eines Streifens 18 eine Raumdimension 30 aufnehmen, werden fortwährend Interferogramme 31 der einzelnen Bereiche 17 aufgenommen. Bedingt durch die Dispersion der Echelle-Gitter 24, 25 erstrecken sich die Interferogramme 31 in Dispersionsrichtung 32 parallel zu der Richtung 15 über den gesamten Detektor 20. Durch die stetige Fortbewegung des Satelliten 11 werden die Streifen 18 nacheinander über das gleiche Beobachtungsfeld 16 auf der Erdoberfläche 12 bewegt. Durch diese Bewegung des Satelliten 11 wird die zweite Raumdimension des Bildes, die senkrecht zu der Raumdimension 30 ausgerichtet ist, erzeugt. Wichtig ist bei dieser Push-Broom-Erdbeobachtung, dass der Satellit stets die gleiche Geschwindigkeit beibehält bzw. dass das Beobachtungsfeld 16 stets so aufgenommen wird, dass die einzelnen Streifen 18 überlappen. Nur dadurch lässt sich für jeden Bereich 17 ein kompletter dreidimensionaler Datensatz erzeugen.

Wie bereits oben ausgeführt, führt die Benutzung von den dispersiven Elementen, hier Echelle-Gitter, zu dem Problem, dass sich die spektralen Informationen mit den räumlichen Informationen in jedem Pixel überlappen. Daher kann die spektrale Information nicht eindeutig von der räumlichen Information für beliebige Beobachtungsfelder 16 unterschieden werden. Dieses Problem wird dadurch umgangen, indem die einzelnen Bilder eines Beobachtungsfeldes 16, über das mehrere Streifen 18 des Detektors 20 gelaufen sind, neu angeordnet werden bzw. umgeordnet werden. D. h., dass in Richtung 15 aufeinanderfolgende Bilder aufgenommen und dann einzelne Interferogrammlinien einzelner Pixel so umgeordnet werden, dass die Bilder für jeden Bereich 17 auf der Erdoberfläche 12 ein vollständiges Interferogramm ergeben. Um die spektralen von den räumlichen Informationen zu trennen werden somit die einzelnen Interferogramme umgeordnet und sodann Fourier-Transformationen durchgeführt, um die spektralen von den räumlichen Informationen zu trennen.

In der Fig. 4 ist der Detektor 20 zu drei aufeinanderfolgenden Zeiten abgebildet, nämlich zu T=1, T=2, T=3. Die Zeitintervalle stellen hier willkürliche Werte dar, sind in der Realität allerdings so bemessen, dass das gleiche Beobachtungsfeld 16 auf der Erdoberfläche 12 nacheinander durch die Detektorzeilen R1, R2 und R3 aufgenommen wird, wenn der Satellit 11 sich in Richtung 15 fortbewegt. Aus der Fig. 4 geht hervor, dass der Kreis und das Dreieck, die hier räumlichen Merkmale auf der Oberfläche 12 der Erde 13 darstellen sollen, zum Zeitpunkt T=1 durch die Pixelreihe R1, zum Zeitpunkt T=2 durch die Pixelreihe R2 und zum Zeitpunkt T=3 durch die Pixelreihe R3. Das wiederholt sich so lange, bis der Detektor 20 komplett über das Beobachtungsfeld 16 bewegt wurde. Dadurch, dass die übrigen Streifen 18 bzw. Pixelreihen gleichermaßen Bilder aufnehmen, kann ein zweidimensionales Abbild der Oberfläche 12 erzeugt werden.

Während sich über die Zeiten T=1 bis T=3 die räumlichen Informationen des Beobachtungsfelds 16 nicht ändern, verändern sich aufgrund der Gitterdispersion für jeden Zeitpunkt die aufgenommene Interferenz der beiden Wellenfronten aus den Armen. D. h. dass während des Abbildens der stets gleichen räumlichen Merkmale durch die aufeinanderfolgenden Pixelreihen, die aufgenommenen räumlichen Merkmale mit verschiedenen optischen Pfaden durch das Spektrometer aufgenommen werden. In der Summe der Bilder ergibt sich somit ein zweidimensionales Abbild eines jeden Bereichs 17, das durch ein Interferogramm überlagert ist. Durch die anschließende Umordnung der Bilder zu einem Komposit-Interferogramm (Fig. 4) und die Fourier-Transformation werden die räumlichen Informationen von dem spektralen Inhalt des Beobachtungsfeldes 16 getrennt. Da dieses Verfahren kontinuierlich während der Bewegung des Satelliten 11 durchgeführt wird, ist das Ergebnis der Messung ein dreidimensionaler Datenwürfel mit spektralen Informationen zu jedem Bereich 17 auf der Oberfläche 12.

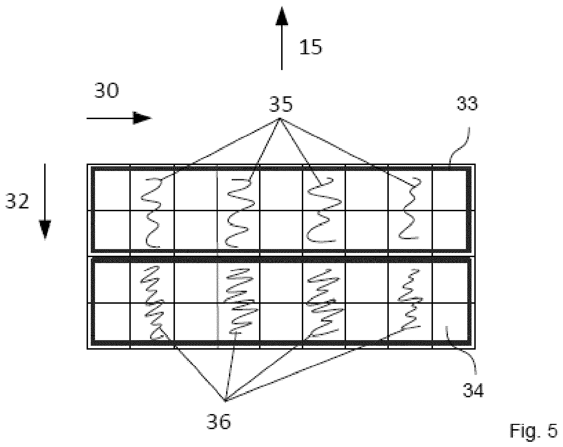

In der Fig. 5 ist ein schematisches Abbild des Detektors 20 mit zwei Bandpassfiltern 33, 34 dargestellt. Alternativ ist es auch denkbar, dass einem segmentierten Filter zwei Bandpässe 33, 34 zugeordnet sind. Durch diese Bandpassfilter 33, 34 wird das Spektrum in Dispersionsrichtung 32 in zwei Bandpässe getrennt. Für jeden Bandpass werden individuelle Interferogramme 35, 36 aufgenommen, welche der Beugungsordnung der Gitter 24, 25 entsprechen. Die Bandpassfilter 33, 34 können auch die Interferogramme 35, 36 je nach Anwendungsbedarf in räumliche Richtung trennen. Es sei ausdrücklich darauf hingewiesen, dass das hier beschriebene Verfahren nicht auf die Anwendung von zwei Bandpassfiltern 33, 34 eingeschränkt sein soll.

Im Allgemeinen hängen die Anzahl der spektralen Bänder, die Auflösung und die Bandbreite bei einer bestimmten Detektorgröße voneinander ab. Zum Beispiel kann die spektrale Auflösung eines bestimmten Bandes durch Verkleinerung der spektralen Bandbreite eines der Bänder erhöht werden. Durch Austausch von Detektorflächen zwischen bestimmten spektralen Bändern können unterschiedliche spektrale Auflösungen und spektrale Bandbreiten für verschiedene Bänder erreicht werden.

**Bezugszeichenliste:**

| | | | |
|---|---|---|---|
| 10 | Spektrometer | 36 | Interferogramm |
| 11 | Satellit | 37 | erster Spektrometer-Arm |
| 12 | Oberfläche | 38 | zweiter Spektrometer-Arm |
| 13 | Erde | 39 | erste Seite |
| 14 | Umlaufbahn | 40 | erste Seite |
| 15 | Richtung | 41 | zweite Seite |
| 16 | Beobachtungsfeld | 42 | zweite Seite |
| 17 | Bereich | | |
| 18 | Streifen | | |
| 19 | Interferogramm | | |
| 20 | Detektor | | |
| 21 | Wellen | | |
| 22 | Bandpassfilter | | |
| 23 | Voroptik | | |
| 24 | Echelle-Gitter | | |
| 25 | Echelle-Gitter | | |
| 26 | Strahlteiler | | |
| 27 | Prisma | | |
| 28 | Prisma | | |
| 29 | Detektoroptik | | |
| 30 | Raumdimension | | |
| 31 | Interferogramm | | |
| 32 | Dispersionsrichtung | | |
| 33 | Bandpassfilter | | |
| 34 | Bandpassfilter | | |
| 35 | Interferogramm | | |

## Patentansprüche

1. Spatial-Heterodyne-Spektrometer (10) für eine mehrdimensionale, insbesondere dreidimensionale, nämlich für zwei räumliche Dimensionen und eine spektrale Dimension, Multiband-Push-Broom-Erdbeobachtung, vorzugsweise mittels eines Satelliten (11), mit einem Strahlteiler (26) und einem ersten Spektrometer-Arm (37) und einem zweiten Spektrometer-Arm (38), wobei an zweiten Seiten (41, 42) der beiden Spektrometer-Arme (37, 38) jeweils ein Echelle-Gitter (24, 25) angeordnet ist und einem an einer ersten Seite (40), insbesondere einem Ausgang, des zweiten Spektrometer-Arms (38) angeordneten Detektor (20), auf dem Interferenzmuster, der durch eine erste Seite (39), insbesondere einem Eingang, des ersten Spektrometer-Arms (37) einfallenden elektromagnetischen Wellen (21), detektierbar sind.

2. Spatial-Heterodyne-Spektrometer (10) nach Anspruch 1, **dadurch gekennzeichnet, dass** die beiden Echelle-Gitter (24, 25) relativ zu einer optischen Achse des Spektrometers (10) um einen Littrow-Winkel *θ_{L}* verkippt sind, wobei die beiden Echelle-Gitter (24, 25) in entgegengesetzte Richtungen verkippt sind.

3. Spatial-Heterodyne-Spektrometer (10) nach Anspruch 1 oder 2, **dadurch gekennzeichnet, dass** an der ersten Seite (39) des ersten Spektrometer-Arms (37) eine fokussierende Voroptik (23) angeordnet ist.

4. Spatial-Heterodyne-Spektrometer (10) nach Anspruch 3, **dadurch gekennzeichnet, dass** vor dem Detektor (20) mindestens ein, vorzugsweise segmentierter, Bandpassfilter (22) angeordnet ist.

5. Spatial-Heterodyne-Spektrometer (10) nach einem der vorhergehenden Ansprüche, **dadurch gekennzeichnet, dass** an der ersten Seite (40) des zweiten Spektrometer-Arms (38) eine Detektoroptik (29) angeordnet ist.

6. Spatial-Heterodyne-Spektrometer (10) nach einem der vorhergehenden Ansprüche, **dadurch gekennzeichnet, dass** zwischen dem Strahlteiler (26) und dem ersten und dem zweiten Echelle-Gitter (24, 25) jeweils ein feldaufweitendes Prisma (27, 28) angeordnet ist.

7. Spatial-Heterodyne-Spektrometer (10) nach einem der vorhergehenden Ansprüche, **dadurch gekennzeichnet, dass** wenigstens einige, insbesondere sämtliche, der in den Ansprüchen 1 bis 6 beschriebenen Komponenten zu einem kompakten monolithischen Block zusammenfassbar sind.

8. Verfahren zur Durchführung einer hochauflösenden, mehrdimensionalen, insbesondere dreidimensionalen, nämlich für zwei räumliche Dimensionen und eine spektrale Dimension, Multiband-Push-Broom-Erdbeobachtung in Nadir-Sicht, insbesondere mittels Satelliten (11), unter Verwendung eines Spatial-Heterodyne-Spektrometers (10) gemäß Anspruch 1, **dadurch gekennzeichnet, dass** durch einen Detektor (20) in einer zeitlichen Abfolge mehrere Bilder, insbesondere einzelne Interferogrammlinien, zu einem gleichen Bereich (17) auf der Erdoberfläche (12) aufgenommen werden, die zu einem mehrdimensionalen Bild umgeordnet werden, wobei dieses mehrdimensionale Bild sowohl spektrale als auch räumliche Informationen des Bereichs (17) auf der Erdoberfläche (12) enthält.

9. Verfahren nach Anspruch 8, **dadurch gekennzeichnet, dass** der Detektor (20) als optischer Sensor ausgebildet ist, mit xₙ Pixel-Spalten und yₘ Pixel-Zeilen, wobei die Zeile y₁ mit den x₁ bis xₙ Pixeln senkrecht zu einer Bewegungsrichtung (15) des Spektrometers (10) ausgerichtet ist und zu einem Zeitpunkt T=1 durch jeden Pixel der Zeile y₁ spektrale Informationen, insbesondere einzelne Interferogrammlinien, mehrerer nebeneinander liegender Bereiche auf der Erdoberfläche (12) aufgenommen werden und zu einem Zeitpunkt T=2 durch jeden Pixel der Zeile y₂ spektrale Informationen derselben Bereiche (17) auf der Erdoberfläche (12) aufgenommen werden, bis alle m Zeilen des Detektors (20) die gleichen Bereiche (17) abgescannt haben.

10. Verfahren nach den Anspruch 9, **dadurch gekennzeichnet, dass** die spektralen Informationen aller Pixel N einer Spalte xₙ, die den gleichen Bereich (17) auf der Erdoberfläche (12) aufgenommen haben, umgeordnet werden, um die spektralen als auch die räumlichen Informationen dieses Bereichs (17) auf der Erdoberfläche (12) zu erhalten.

11. Verfahren nach Anspruch 10, **dadurch gekennzeichnet, dass** nach der Umordnung der einzelnen Bilder, insbesondere der einzelnen Interferogrammlinien, Fourier-Transformationen durchgeführt werden und so die Spektren erzeugt werden.

12. Verfahren nach den Ansprüchen 8 bis 11, **dadurch gekennzeichnet, dass** die spektralen und räumlichen Informationen in Bewegungsrichtung (15) des Spektrometers (10) aufeinanderfolgender Bereiche (17) kontinuierlich aufgenommen werden.
